# EUROPÄISCHE PATENTSCHRIFT

(11) **EP 1 632 672 B1**
(45) Veröffentlichungstag und Bekanntmachung des Hinweises auf die Patenterteilung: **27.02.2013**
(21) Anmeldenummer: 05018548.7
(22) Anmeldetag: 26.08.2005
(51) Int. Cl.: F02K 3/06, F02K 3/072, F04D 19/00, F04D 19/02

(54) **Fan für ein Flugtriebwerk**
Fan for an aircraft engine
Soufflante pour réacteur d'avion

(30) Priorität: 03.09.2004 DE 102004042739
(43) Veröffentlichungstag der Anmeldung: 08.03.2006
(73) Patentinhaber: MTU Aero Engines GmbH, 80995 München (DE)
(72) Erfinder: Klingels, Hermann, 85221 Dachau (DE); Selmaier, Rudolf, 85777 Fahrenzhausen (DE)

(56) Entgegenhaltungen:
- GB-A- 1 197 711
- US-A- 3 729 957
- US-A- 4 651 521
- US-B1- 6 209 311

## Beschreibung

Die Erfindung betrifft einen Fan für ein Flugtriebwerk, insbesondere ein Gasturbinenflugtriebwerk, nach dem Oberbegriff des Patentanspruchs 1. Des weiteren betrifft die Erfindung ein Flugtriebwerk gemäß dem Oberbegriff des Patentanspruchs 16.

Flugtriebwerke bestehen unter anderem aus einem Fan bzw. einem Lüfter sowie einem Kerntriebwerk, wobei das Kerntriebwerk mindestens einen Verdichter, eine Brennkammer sowie mindestens eine Turbine umfasst. Konventionelle Flugtriebwerke verfügen über einen Fan mit einem mit Fanschaufeln beschaufelten Fanrotor, wobei die Fanschaufeln einen Schaufelkranz bilden und sich ausgehend von einer Nabe des Fanrotors nach radial außen bis zu einer äußeren Kanalwand eines Fanströmungskanals erstrecken. Bei derartigen, konventionellen Flugtriebwerken ist demnach der Fanrotor einreihig beschaufelt, d.h. er verfügt über lediglich einen Schaufelkranz aus Fanschaufeln. Bei derartigen Fans ist der erzielbare Massenstrom durch den Fan begrenzt.

Zur Steigerung des Massenstroms durch einen Fan ist es aus dem Stand der Technik bereits bekannt, stromaufwärts des Fanrotors einen Vorsatzrotor zu positionieren, wobei ein solcher Vorsatzrotor auch als Vorsatzläufer bezeichnet wird. So zeigt zum Beispiel die US 6,722,847 B2 einen Fan eines Flugtriebwerks mit einem Fanrotor und einem stromaufwärts des Fanrotors positionierten Vorsatzrotor. Die Fanschaufeln des Fanrotors erstrecken sich nach radial außen bis zu der äußeren Kanalwand des Fanströmungskanals; Vorsatzschaufeln des Vorsatzrotors hingegen erstrecken sich ausgehend von einer Nabe nach radial außen, enden jedoch mit deutlichem Abstand von der äußeren Kanalwand des Fanströmungskanals. Nach der US 6,722,847 B2 ist der Vorsatzrotor integraler Bestandteil des Fanrotors, die Vorsatzschaufeln sind demnach starr mit den Fanschaufeln verbunden, sodass beide Rotoren nach diesem Stand der Technik mit der gleichen Drehzahl und der gleichen Drehrichtung rotieren müssen.

Das Dokument US 3 729 957 A betrifft einen Fan für ein Gasturbinenflugtriebwerk, wobei der Fan einen Fanrotor und einen Vorsatzrotor mit gegenüber dem Fanrotor radial erheblich kürzeren Vorsatzschaufeln aufweist. Der Vorsatzrotor und der Fanrotor sind als separate Rotoren ausgebildet, wobei der Vorsatzrotor mit einer höheren Drehzahl antreibar ist als der Fanrotor. Dabei sind beide Rotoren über ein Getriebe mit einer Niederdruckturbinenwelle gekoppelt.

Aus dem Dokument US 6 209 311 B1 sind Gasturbinenflugtriebwerke mit einem Fanrotor und mit einem oder zwei Vorsatzrotoren bekannt. Siehe insbesondere die Figur 6 dieses Dokuments. Die beiden Vorsatzrotoren sind dabei integral verbunden und laufen mit der selben Drehzahl. Der Fanrotor ist separat ausgeführt und wird von den Vorsatzrotoren aerodynamisch über eine in den Fanrotor integrierte Luftturbine angetrieben.

Hiervon ausgehend liegt der vorliegenden Erfindung das Problem zu Grunde, einen neuartigen Fan für ein Flugtriebwerk, insbesondere ein Gasturbinenflugtriebwerk, sowie ein neuartiges Flugtriebwerk zu schaffen.

Dieses Problem wird durch einen Fan für ein Flugtriebwerk, insbesondere ein Gasturbinenflugtriebwerk, gemäß Patentanspruch 1 gelöst. Dabei sind ein Vorsatzrotor und der Fanrotor als separate Rotoren ausgebildet, wobei der separate Vorsatzrotor mit einer höheren Drehzahl antreibbar ist wie der Fanrotor. Zwischen dem separaten Vorsatzrotor und dem Fanrotor ist ein weiterer Vorsatzrotor angeordnet. Erfindungsgemäß ist der weitere Vorsatzrotor integraler Bestandteil des Fanrotors und ist deshalb mit der selben Drehzahl antreibbar, wie letzterer.

Hierdurch ist eine weitere Steigerung des Druckverhältnisses im Wirkbereich des Vorsatzrotors und damit eine Steigerung des Massenstroms durch den Fan realisierbar. Mit dem vergrößerten Massendurchsatz und dem erhöhten Druckverhältnis im Nabenbereich ergibt sich bei gegebenem Durchmesser des Fanströmungskanals für einen bestimmten Schub des Flugtriebwerks ein geringeres Druckverhältnis im Fanaußenbereich, wobei das geringere Druckverhältnis mit einer niedrigeren Umfangsgeschwindigkeit erzeugt wird, wodurch Relativmachzahlen kleiner werden und letztendliche geringer Verluste und damit ein verbesserter Wirkungsgrad erzielt werden kann. Des weiteren führen die verringerten Umfangsgeschwindigkeiten sowie reduzierten Druckverhältnisse zu einer deutlichen Lärmreduktion des Flugtriebwerks. Ein weiterer Vorteil liegt darin, dass Fremdkörper und Verunreinigungen aus angesaugter Luft besser auszentrifugiert werden können und damit die Gefahr von Beschädigungen sowie Erosion im Kerntriebwerk minimiert wird.

Nach einer vorteilhaften Weiterbildung der Erfindung ist ein Übersetzungsverhältnis zwischen der Drehzahl des separaten Vorsatzrotors und der Fanrotordrehzahl variabel. Der separate Vorsatzrotor und der Fanrotor sind in gleichsinnigen Drehrichtungen sowie in gegensinnigen Drehrichtungen antreibbar.

Das erfindungsgemäße Flugtriebwerk ist in Patentanspruch 16 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: einen ausschnittsweisen Querschnitt durch ein Flugtriebwerk mit einem separaten Vorsatzrotor, nach den Stand der Technik, und
- Fig. 2: einen ausschnittsweisen Querschnitt durch ein erfindungsgemäßes Flugtriebwerk.

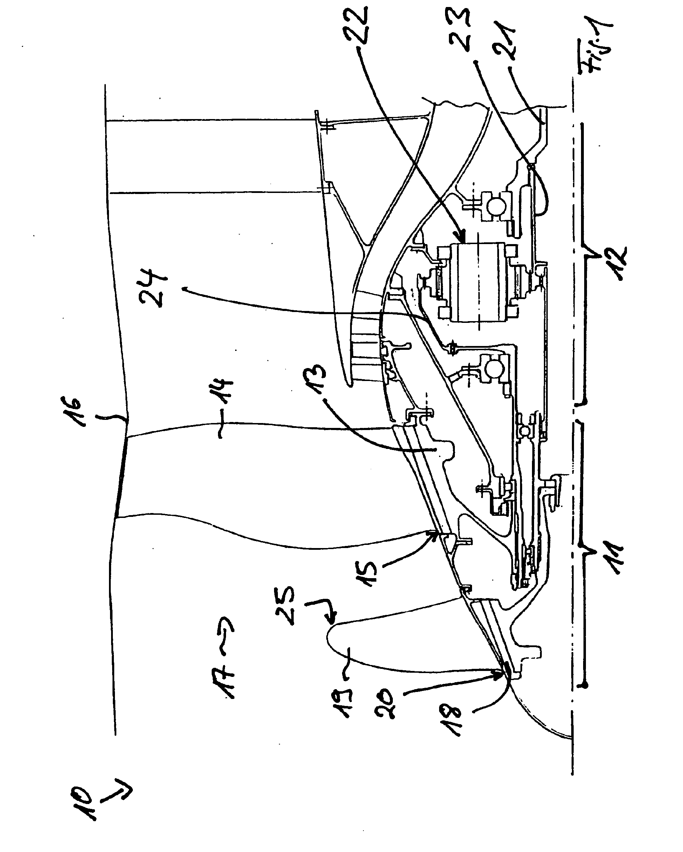

Fig. 1 zeigt einen teilweisen Querschnitt durch ein Flugtriebwerk 10 im Bereich eines Fans 11 sowie eines sich stromabwärts des Fans 11 anschlie-βenden Kerntriebwerks 12.

Der Fan 11 umfasst einen Fanrotor 13 mit Fanschaufeln 14, wobei die Fanschaufeln 14 des Fanrotors 13 einen Schaufelkranz bilden. Wie Fig. 1 entnommen werden kann, erst=ecken sich die Fanschaufeln 14 ausgehend von einer Nabe 15 nach radial außen bis an eine äußere Kanalwand 16 eines Fanströmungskanals 17 des Fans 11. Die Fanschaufeln 14 des Fanrotors 13 erstrecken sich demnach ausgehend von der Nabe 15 des Fanrotors 13 über die gesamte radiale Erstreckung des Fanströmungskanals 17.

Gemäß Fig. 1 ist stromaufwärts des Fanrotors 13 ein Vorsatzrotor 18 positioniert. Der Vorsatzrotor 18 umfasst Vorsatzschaufeln 19, die sich ausgehend von einer Nabe 20 des Vorsatzrotors 18 ebenfalls nach radial außen erstrecken, jedoch mit deutlichem Abstand von der Kanalwand 16 des Fanströmungskanals 17 enden. So beträgt die radiale Erstreckung der Vorsatzschaufeln 19 des Vorsatzrotors 18 zwischen 30 % und 50 % der radial Erstreckung des Fanströmungskanals 17.

Dabei sind der Fanrotor 19 sowie der Vorsatzrotor 18 als zwei separate Rotoren ausgebildet. Der Vorsatzrotor 19 wird mit einer höheren bzw. größeren Drehzahl betrieben als der Fanrotor 13. Dabei können der Vorsatzrotor 18 sowie der Fanrotor 13 entweder in gleichsinnigen Drehrichtungen oder auch gegensinnigen Drehrichtungen betrieben werden. Neben unterschiedlichen Drehzahlen können Fanrotor 13 und Vorsatzrotor 18 demnach auch unterschiedliche Drehrichtungen aufweisen.

Da der Vorsatzrotor 18 mit einer deutlich höheren Drehzahl betrieben wird als der Fanrotor 13, kann der Massendurchaatz bei gegebenem Durchmesser des Fanströmungskanals gesteigert werden. Die Druckverhältrisse im Wirkbereich des Vorsatzrotors 18 und demnach im Nabenbereich des Fans konnen so gesteigert werden.

Das Übersetzungsverhältnis zwischen der Drehzahl des Vorsatzrotors 18 und der Drehzahl des Fanrotors 13 kann entweder fest oder variabel sein. Bei einem variablen Übersetzungsverhältnis zwischen der Vorsatzrotordrehzahl und der Fanrotordrehzahl kann über den gesamten Betriebsbereich des Flugtriebwerks eine Optimierung des Massendurchsatzes sowie der Druckverhältnisse im Fan realisiert werden.

Im Ausführungsbeispiel der Fig. 1 ist der Vorsatzrotor 18 unmittelbar mit einer Welle 21 einer nicht-dargestellten Niederdruckturbine verbunden. In diesem Fall wird demnach der Vorsatzrotor 18 unmittelbar von der Niederdruckturbine angetrieben, wobei es sich bei der Niederdruckturbine dann um eine schnelllaufende Niederdruckturbine handelt. Zwischen den Fanrotor 13 und die Welle 21 ist im Ausführungsbeispiel der Fig. 1 ein Getriebe 22 geschaltet. Mithilfe des Getriebes 22 wird die Drehzahl der Welle 21 in eine für den Antrieb des Fanrotors 13 benötigte, niedrigere Drehzahl untersetzt. Weiterhin ist mithilfe des Getriebes 22 die Drehrichtung des Fanrotors 13 derart einstellbar, dass derselbe sich in derselben Richtung oder in der entgegengesetzten Richtung wie der Vorsatzrotor 18 dreht. Bevorzugt dreht sich der Vorsatzrotor 18 in entgegengesetzter Richtung zum Fanrotor 13.

Wie Fig. 1 entnommen werden kann, ist einerseits zwischen die Welle 21 und den Vorsatzrotor 18 und andererseits zwischen das Getriebe 22 und den Fanrotor 13 jeweils eine Kupplung 23 bzw. 24 geschaltet.

Wie bereits erwähnt, wird im Ausführungsbeispiel der Fig. 1 der Vorsatzrotor 18 unmittelbar von der Welle 21 der nicht-dargestellten Niederdruckturbine angetrieben, der Fanrotor 13 hingegen wird unter Zwischenschaltung eines Getriebes 22 von der Welle 21 indirekt angetrieben. Im Unterschied zum Ausführungsbeispiel der Fig. 1 ist es auch möglich, dass der Fanrotor 13 unmittelbar mit der Welle 21 der Niederdruckturbine gekoppelt ist, und so direkt von der Welle 21 angetrieben wird. Diese Ausgestaltung ist bevorzugt, wenn die Niederdruckturbine als langsamlaufende Niederdruckturbine ausgeführt ist. In diesem Fall ist dann zwischen die Welle 21 und den Vorsatzrotor 18 ein Getriebe geschaltet, welches die relativ niedere Drehzahl der Welle 21 in eine relativ höhere Drehzahl zum Antrieb des Vorsatzrotors 18 übersetzt.

Weiterhin ist es auch möglich, sowohl zwischen den Vorsatzrotor 18 und die Welle 21 als auch zwischen den Fanrotor 13 und die Welle 21 jeweils ein Getriebe zu schalten. Bevorzugt ist jedoch eine Ausführungsform, in welcher entweder nur zwischen den Fanrotor 13 und die Welle 21 oder nur zwischen den Vorsatzrotor 18 und die Welle 21 ein Getriebe geschaltet ist. In dem Fall, in dem mit einem Getriebe gearbeitet wird, ergibt sich eine kompakter und leichtere und letztendliche kostengünstigere Ausführung für das Flugtriebwerk.

Es sei an dieser Stelle darauf hingewiesen, dass die Vorsatzschaufeln 19 des Vorsatzrotors 18 an ihren radial äußeren Enden 25 ein Außendeckband oder Endscheiben aufweisen können. Endscheiben werden auch als Winglets bezeichnet. Bei Verwendung eines Außendeckbands bzw. von Endscheiben an den radial außenliegenden Enden der Vorsatzschaufeln 19 können Randverluste der Strömung minimiert werden.

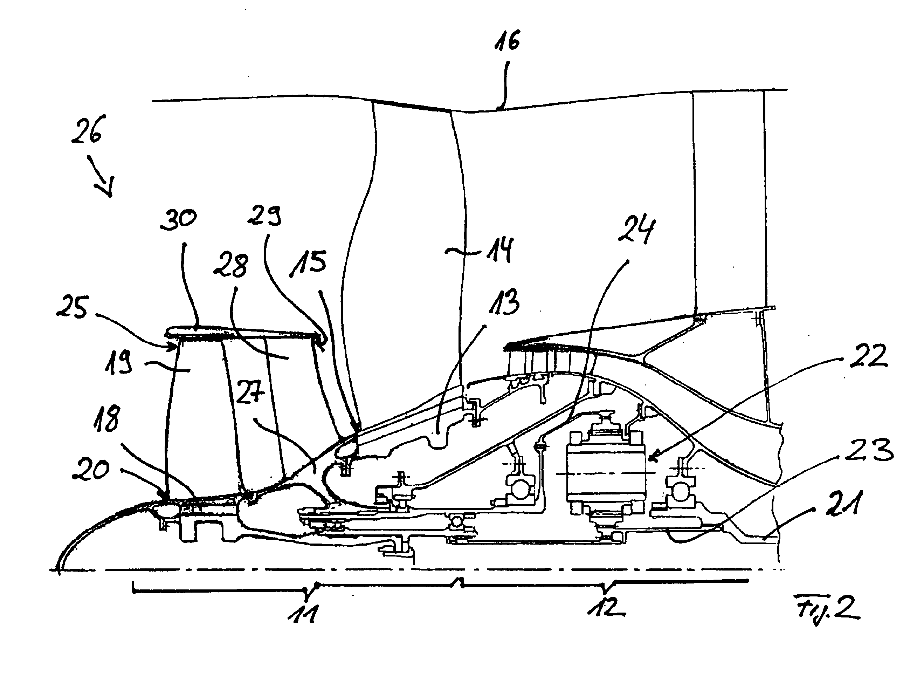

Ein Ausführungsbeispiel eines erfindungsgemäßen Flugtriebwerks 26 im Bereich eines Fans sowie eines sich stromabwärts des Fans anschließenden Kerntriebwerks zeigt Fig. 2. Da das Flugtriebwerk 26 der Fig. 2 im wesentlichen dem Flugtriebwerk 10 der Fig. 1 entspricht, werden zur Vermeidung unnötiger Wiederholungen für gleiche Baugruppen gleiche Bezugsziffern verwendet und es wird auf die obigen Ausführungen verwiesen. Nachfolgend wird bzgl. des Flugtriebwerks 26 der Fig. 2 auf die Details eingegangen, die das Flugtriebwerk 26 der Fig. 2 vom Flugtriebwerks 10 der Fig. 1. unterscheiden.

Im Ausführungsbeispiel der Fig. 2 ist zwischen dem Vorsatzrotor 18 und dem Fanrotor 13, die als separate Rotoren ausgebildet sind, ein weiterer Vorsatzrotor 27 positioniert. Der weitere Vorsatzrotor 27 ist integraler Bestandteil des Fanrotors 13 und demnach mit derselben Drehzahl und Drehrichtung wie der Fanrotor 13 antreibbar. Der weitere Vorsatzrotor 27 verfügt über Vorsatzschaufeln 28, die eine radiale Erstreckung aufweisen, die in etwa der radialen Erstreckung der Vorsatzschaufeln 19 des als separater Rotor ausgebildeten Vorsatzrotors 18 entspricht. Gemäß Fig. 2 verfügen die Vorsatzschaufeln 28 des Vorsatzrotors 27 an radial außenliegenden Enden 29 über Deckbänder 30, die sich in den Bereich der Vorsatzschaufeln 19 des als separater Rotor ausgebildeten Vorsatzrotors 18 erstrecken, wobei die Deckbänder 30 ein Gehäuse bzw. einen Einlaufbelag für die Vorsatzschaufeln 19, nämlich die Enden 25 derselben, des als separater Rotor ausgebildeten Vorsatzrotors 18 bilden.

Der erfindungsgemäße Fan erlaubt bei gegebenen Aussendruchnesser desselben eine deutliche Erhöhung des Massenstroms sowie eine deutliche Steigerung des Druckverhältnisses im Nabenbereich. Hierdurch ergibt sich bei gegebenem Fandurchmesser für einen bestimmten Schub ein geringeres Druckverhältnis im Fanaußenbereich. Dieses geringere Druckverhältnis im Fanaußenbereich wird mit einer niedrigeren Umfangsgeschwindigkeit erzeugt, wodurch die Relativmachzahlen kleiner werden und wodurch letztendlich geringere Verluste und ein optimierter Wirkungsgrad erzielt werden kann. Die geringere Umfangsgeschwindigkeit sowie die reduzierten Druckverhältnisse tragen des weiteren zu einer Lärmreduktion bei. Weiterhin ist ein verbessertes Auszentrifugieren von Fremdkörpern und Verunreinigungen aus der angesaugten Luft realisierbar, wodurch die Gefahr von Beschädigungen und Erosion im Kerntriebwerk reduziert wird. Es ist auch möglich, den mithilfe der hier vorliegenden Erfindung realisierbaren, vergrößerten Massendurchsatz zur Reduktion des Fandurchmessers und damit zur Gewichtsreduktion zu verwenden.

## Patentansprüche

1. Fan für ein Flugtriebwerk, insbesondere ein Gasturbinenflugtriebwerk, wobei der Fan einen Fanrotor (13) mit Fanschaufeln (14) aufweist, die sich ausgehend von einer Nabe nach radial außen bis zu einer äußeren Kanalwand (16) eines Fanströmungskanals erstrecken, mit einem stromaufwärts des Fanrotors (13) positionierten Vorsatzrotor (18) mit Vorsatzschaufeln (19), die sich ausgehend von einer Nabe nach radial außen erstrecken und mit Abstand von der äußeren Kanalwand (16) des Fanströmungskanals enden, wobei der Vorsatzrotor (18) und der Fanrotor (13) als separate Rotoren ausgebildet sind, und wobei der Vorsatzrotor (18) mit einer höheren Drehzahl antreibbar ist wie der Fanrotor (13), und mit einem zwischen dem separaten Vorsatzrotor (18) und dem Fanrotor (13) positionierten, weiteren Vorsatzrotor (27), **dadurch gekennzeichnet,**
**dass** der weitere Vorsatzrotor (27) integraler Bestandteil des Fanrctors (13) ist und deshalb mit derselben Drehzahl wie der Fanrotor (13) antreibbar ist.

2. Fan nach Anspruch 1,
**dadurch gekennzeichnet,**
**dass** ein Übersetzungsverhältnis zwischen der Drehzahl des separaten Vorsatzrotors (18) und der Drehzahl des Fanrotors (13) fest ist.

3. Fan nach Anspruch 1,
**dadurch gekennzeichnet,**
**dass** ein Übersetzungsverhältnis zwischen der Drehzahl des separaten Vorsatzrotors (18) und der Drehzahl des Fanrotors (13) variabel ist.

4. Fan nach einem der Ansprüche 1 bis 3,
**dadurch gekennzeichnet,**
**dass** der separate Vorsatzrotor (18) und der Fanrotor (13) in gleichsinnigen Drehrichtungen antreibbar sind.

5. Fan nach einem der Ansprüche 1 bis 3,
**dadurch gekennzeichnet,**
**dass** der separate Vorsatzrotor (18) und der Fanrotor (13) in gegensinnigen Drehrichtungen antreibbar sind.

6. Fan nach einem der Ansprüche 1 bis 5,
**dadurch gekennzeichnet,**
**dass** der separate Vorsatzrotor (18) direkt mit einer Welle (21) einer Niederdruckturbine gekoppelt und von dieser antreibbar ist.

7. Fan nach Anspruch 6,
**dadurch gekennzeichnet,**
**dass** der Fanrotor (13) über ein zwischengeschaltetes Getriebe (22) mit der Welle (21) der Niederdruckturbine gekoppelt und von dieser antreibbar ist.

8. Fan nach einem der Ansprüche 1 bis 5,
**dadurch gekennzeichnet**,
der Fanrotor direkt mit einer Welle einer Niederdruckturbine gekoppelt und von dieser antreibbar ist.

9. Fan nach Anspruch 8,
**dadurch gekennzeichnet,**
**dass** der separate Vorsatzrotor über ein zwischengeschaltetes Getriebe mit der Welle der Niederdruckturbine gekoppelt und von dieser antreibbar ist.

10. Fan nach einem der Ansprüche 1 bis 5,
**dadurch gekennzeichnet,**
**dass** der Fanrotor und der der separate Vorsatzrotor über jeweils ein zwischengeschaltetes Getriebe mit der Welle der Niederdruckturbine gekoppelt und von dieser antreibbar sind.

11. Fan nach einem der Ansprüche 1 bis 10,
**dadurch gekennzeichnet,**
**dass** die Vorsatzschaufeln des separaten Vorsatzrotors an ihren radial äußeren Enden ein Außendeckband aufweisen.

12. Fan nach einem der Ansprüche 1 bis 10,
**dadurch gekennzeichnet,**
**dass** die Vorsatzschaufeln des separaten Vorsatzrotors an ihren radial äußeren Enden Endscheiben aufweisen.

13. Fan nach einem der Ansprüche 1 bis 12,
**dadurch gekennzeichnet,**
**dass** die Vorsatzschaufeln (19) des separaten Vorsatzrotors (18) eine radiale Erstreckung aufweisen, die zwischen 30% und 50% der radialen Erstreckung des Fanströmungskanals beträgt.

14. Fan nach einem der Ansprüche 1 bis 13,
**dadurch gekennzeichnet,**
**dass** die Vorsatzschaufeln (28) des weiteren Vorsatzrotors (27) eine radiale Erstreckung aufweisen, die in etwa der radialen Erstreckung der Vorsatzschaufeln (19) des als separater Rotor ausgebildeten Vorsatzrotors (18) entspricht.

15. Fan nach einem der Ansprüche 1 bis 14,
**dadurch gekennzeichnet,**
**dass** die Vorsatzschaufeln (28) des weiteren Vorsatzrotors (27) Deckbänder (30) aufweisen, die sich in den Bereich der Vorsatzschaufeln (19) des als separater Rotor ausgebildeten Vorsatzrotors (18) erstrecken, wobei die Deckbänder (30) ein Gehäuse bzw. einen Einlaufbelag für die Vorsatzschaufeln (13) des als separater Rotor ausgebildeten Vorsatzrotors (18) bilden.

16. Flugtriebwerk, insbesondere Gasturbinenflugtriebwerk, mit einem Fan (11) und mit einem Kerntriebwerk (12) umfassend mindestens einen Verdichter, mindestens eine Brennkammer und mindestens eine Turbine,
**dadurch gekennzeichnet,**
**dass** der Fan (11) nach einem der Ansprüche 1 bis 15 ausgebildet ist.

## Claims

1. A fan for an aircraft engine, in particular a gas turbine aircraft engine, wherein the fan has a fan rotor (13) with fan blades (14) that extend radially outwards from a hub to an outer channel wall (16) of a fan flow channel, having an auxiliary rotor (18) which is positioned upstream of the fan rotor (13) and has auxiliary blades (19) that extend radially outwards from a hub and end at a distance from the outer channel wall (16) of the fan flow channel, wherein the auxiliary rotor (18) and the fan rotor (13) are formed as separate rotors, and wherein the auxiliary rotor (18) can be driven at a higher rotational speed than the fan rotor (13), and having a further auxiliary rotor (27) that is positioned between the separate auxiliary rotor (18) and the fan rotor (13),
**characterised in that**
the further auxiliary rotor (27) is an integral component part of the fan rotor (13) and can therefore be driven at the same rotational speed as the fan rotor (13).

2. A fan according to claim 1,
**characterised in that**
a transmission ratio between the rotational speed of the separate auxiliary rotor (18) and the rotational speed of the fan rotor (13) is fixed.

3. A fan according to claim 1,
**characterised in that**
a transmission ratio between the rotational speed of the separate auxiliary rotor (18) and the rotational speed of the fan rotor (13) is variable.

4. A fan according to one of claims 1 to 3,
**characterised in that**
the separate auxiliary rotor (18) and the fan rotor (13) can be driven in the same directions of rotation.

5. A fan according to one of claims 1 to 3,
**characterised in that**
the separate auxiliary rotor (18) and the fan rotor (13) can be driven in opposite directions of rotation.

6. A fan according to one of claims 1 to 5,
**characterised in that**
the separate auxiliary rotor (18) is coupled directly to a shaft (21) of a low-pressure turbine and can be driven by this shaft.

7. A fan according to claim 6,
**characterised in that**
the fan rotor (13) is coupled to the shaft (21) of the low-pressure turbine by way of an interposed gear unit (22) and can be driven by this shaft.

8. A fan according to one of claims 1 to 5,
**characterised in that**
the fan rotor is coupled directly to a shaft of a low-pressure turbine and can be driven by this shaft.

9. A fan according to claim 8,
**characterised in that**
the separate auxiliary rotor is coupled to the shaft of the low-pressure turbine by way of an interposed gear unit and can be driven by this shaft.

10. A fan according to one of claims 1 to 5,
**characterised in that**
the fan rotor and the the separate auxiliary rotor are coupled to the shaft of the low-pressure turbine by way of respective interposed gear units and can be driven by this shaft.

11. A fan according to one of claims 1 to 10,
**characterised in that**
the auxiliary blades of the separate auxiliary rotor have an outer shroud band at their radially outer ends.

12. A fan according to one of claims 1 to 10,
**characterised in that**
the auxiliary blades of the separate auxiliary rotor have end plates at their radially outer ends.

13. A fan according to one of claims 1 to 12,
**characterised in that**
the auxiliary blades (19) of the separate auxiliary rotor (18) have a radial extent that amounts to between 30% and 50% of the radial extent of the fan flow channel.

14. A fan according to one of claims 1 to 13,
**characterised in that**
the auxiliary blades (28) of the further auxiliary rotor (27) have a radial extent that substantially corresponds to the radial extent of the auxiliary blades (19) of the auxiliary rotor (18) formed as a separate rotor.

15. A fan according to one of claims 1 to 14,
**characterised in that**
the auxiliary blades (28) of the further auxiliary rotor (27) have shroud bands (30) that extend into the region of the auxiliary blades (19) of the auxiliary rotor (18) formed as a separate rotor, wherein the shroud bands (30) form a housing or an inlet covering for the auxiliary blades (19) of the auxiliary rotor (18) formed as a separate rotor.

16. An aircraft engine, in particular a gas turbine aircraft engine, having a fan (11) and having a core engine (12) comprising at least one compressor, at least one combustion chamber and at least one turbine,
**characterised in that**
the fan (11) is formed according to one of claims 1 to 15.

## Revendications

1. Soufflante pour un réacteur d'avion, en particulier un réacteur d'avion à turbine à gaz, dans laquelle la soufflante présente un rotor de soufflante (13) avec des aubes de soufflante (14), qui s'étendent à partir d'un moyeu radialement vers l'extérieur jusqu'à une paroi de canal extérieure (16) d'un canal d'écoulement de soufflante, et un rotor additionnel (18), positionné en amont du rotor de soufflante (13), comprenant des aubes additionnelles (19) qui s'étendent à partir d'un moyeu radialement vers l'extérieur et se terminent à distance de la paroi de canal extérieure (16) du canal d'écoulement de soufflante, dans laquelle le rotor additionnel (18) et le rotor de soufflante (13) sont réalisés sous la forme de rotors séparés, et dans laquelle le rotor additionnel (18) peut être entraîné avec une vitesse de rotation plus élevée que le rotor de soufflante (13), et avec un autre rotor additionnel (27) positionné entre le rotor additionnel séparé (18) et le rotor de soufflante (13), **caractérisée en ce que** l'autre rotor additionnel (27) fait intégralement partie du rotor de soufflante (13) et peut dès lors être entraîné avec la même vitesse de rotation que le rotor de soufflante (13).

2. Soufflante selon la revendication 1, **caractérisée en ce qu'**un rapport de réduction entre la vitesse de rotation du rotor additionnel séparé (18) et la vitesse de rotation du rotor de soufflante (13) est fixe.

3. Soufflante selon la revendication 1, **caractérisée en ce qu'**un rapport de réduction entre la vitesse de rotation du rotor additionnel séparé (18) et la vitesse de rotation du rotor de soufflante (13) est variable.

4. Soufflante selon l'une quelconque des revendications 1 à 3, **caractérisée en ce que** le rotor additionnel séparé (18) et le rotor de soufflante (13) peuvent être entraînés dans des sens de rotation identiques.

5. Soufflante selon l'une quelconque des revendications 1 à 3, **caractérisée en ce que** le rotor additionnel séparé (18) et le rotor de soufflante (13) peuvent être entraînés dans des directions de rotation de sens contraire.

6. Soufflante selon l'une quelconque des revendications 1 à 5, **caractérisée en ce que** le rotor additionnel séparé (18) est couplé directement à un arbre (21) d'une turbine basse pression et peut être entraîné par celle-ci.

7. Soufflante selon la revendication 6, **caractérisée en ce que** le rotor de soufflante (13) est couplé au moyen d'une transmission intermédiaire (22) à l'arbre (21) de la turbine basse pression et peut être entraîné par celle-ci.

8. Soufflante selon l'une quelconque des revendications 1 à 5, **caractérisée en ce que** le rotor de soufflante est couplé directement à un arbre d'une turbine basse pression et peut être entraîné par celle-ci.

9. Soufflante selon la revendication 8, **caractérisée en ce que** le rotor additionnel séparé est couplé au moyen d'une transmission intermédiaire à l'arbre de la turbine basse pression et peut être entraîné par celle-ci.

10. Soufflante selon l'une quelconque des revendications 1 à 5, **caractérisée en ce que** le rotor de soufflante et le rotor additionnel séparé sont couplés respectivement par une transmission intermédiaire à l'arbre de la turbine basse pression et peuvent être entraînés par celle-ci.

11. Soufflante selon l'une quelconque des revendications 1 à 10, **caractérisée en ce que** les aubes additionnelles du rotor additionnel séparé présentent une bande de recouvrement extérieure sur leurs extrémités radialement extérieures.

12. Soufflante selon l'une quelconque des revendications 1 à 10, **caractérisée en ce que** les aubes additionnelles du rotor additionnel séparé présentent des disques d'extrémité sur leurs extrémités radialement extérieures.

13. Soufflante selon l'une quelconque des revendications 1 à 12, **caractérisée en ce que** les aubes additionnelles (19) du rotor additionnel séparé (18) présentent une extension radiale, qui vaut entre 30 % et 50 % de l'extension radiale du canal d'écoulement de soufflante.

14. Soufflante selon l'une quelconque des revendications 1 à 13, **caractérisée en ce que** les aubes additionnelles (28) de l'autre rotor additionnel (27) présentent une extension radiale, qui correspond environ à l'extension radiale des aubes additionnelles (19) du rotor additionnel (18) réalisé sous la forme d'un rotor additionnel séparé.

15. Soufflante selon l'une quelconque des revendications 1 à 14, **caractérisée en ce que** les aubes additionnelles (28) de l'autre rotor additionnel (27) présentent des bandes de recouvrement (30), qui s'étendent dans la région des aubes additionnelles (19) du rotor additionnel (18) réalisé sous la forme d'un rotor additionnel séparé, dans laquelle les bandes de recouvrement (30) forment une enceinte ou une garniture d'entrée pour les aubes additionnelles (19) du rotor additionnel (18) réalisé sous la forme d'un rotor additionnel séparé.

16. Réacteur d'avion, en particulier réacteur d'avion à turbine à gaz, avec une soufflante (11) et avec un réacteur de base (12) comprenant au moins un compresseur, au moins une chambre de combustion et au moins une turbine, **caractérisé en ce que** la soufflante (11) est réalisée selon l'une quelconque des revendications 1 à 15.
